# EUROPEAN PATENT APPLICATION

(11) **EP 4 365 754 A1**
(43) Date of publication of application: **08.05.2024**
(21) Application number: 23825753.9
(22) Date of filing: 17.01.2023
(51) Int. Cl.: G06F 16/332

(54) **COMMON QUESTION ANSWERING METHOD AND SYSTEM, DEVICE AND MEDIUM**

(30) Priority: 24.06.2022 CN 202210730058
(71) Applicant: Chongqing Changan Automobile Co Ltd, Chongqing 400023 (CN)
(72) Inventor: DUAN, Peng, Chongqing 400023 (CN); SHI, Wanqiao, Chongqing 400023 (CN)
(74) Representative: Schulz Junghans Patentanwälte PartGmbB
(86) International application number: PCT/CN2023/072687
(87) International publication number: WO 2023/246093

(57) **Abstract**

Disclosed are a frequently asked question (FAQ) answering method and system, a device, and a medium. The method includes: acquiring a query text and triple information of the query text; determining a first similarity range between the query text and each standard reply text in a knowledge base according to a similarity matching threshold value of a preset standard question in a preset knowledge base, the knowledge base being composed of standard question and answer pairs; performing first comparison on the triple information and a corresponding node in a preset knowledge graph, and determining a second similarity range of the query text and nodes in the knowledge graph; and performing second comparison on the first similarity range, the second similarity range, and a preset similarity range threshold value to determine to output a corresponding reply text in the knowledge base or the knowledge graph. This application can greatly improve the output accuracy of the question and answer interaction and enhance the user experience.

## Description

### Field of the Invention

This application relates to the field of artificial intelligence, and in particular, to a frequently asked question (FAQ) answering method and system, a device, and a medium.

### Background of the Invention

At present, most of intelligent questions and answers are in the form of questions and answers in a knowledge base. It is necessary to define a question and answer pair in advance and store entities in the question into a database in a way of an inverted index for retrieval. Finally, retrieval is performed according to the entities extracted from the user's question, similarity matching is performed between the retrieved question and the user's question, and the matched answer is returned. This kind of question and answer way is limited by the definition of the question and answer pair, and the way users ask questions will also have certain limitations, thus affecting the user experience.

### Summary of the Invention

In view of the above problems present in the related art, this application provides a FAQ answering method and system, a device, and a medium, mainly solving the problems of low efficiency of question and answer response and poor user experience of the existing question and answer way.

To achieve the above objective and other objectives, the technical solutions adopted by this application are described below.

This application provides a FAQ answering method, including:
acquiring a query text and triple information of the query text;
determining a first similarity range between the query text and each standard reply text in a knowledge base according to a similarity matching threshold value of a preset standard question in a preset knowledge base, the knowledge base being composed of standard question and answer pairs;
performing first comparison on the triple information and a corresponding node in a preset knowledge graph, and determining a second similarity range of the query text and nodes in the knowledge graph; and
performing second comparison on the first similarity range, the second similarity range, and a preset similarity range threshold value to determine to output a corresponding reply text in the knowledge base or the knowledge graph.

In an embodiment of this application, the determining a first similarity range between the query text and each standard reply text in a knowledge base according to a similarity matching threshold value of a preset standard question in a preset knowledge base includes:
performing similarity comparison on the query text and a standard question in the knowledge base to obtain a similarity value of each standard question; and
taking the similarity value as a similarity value of a standard reply text corresponding to the standard question, and determining the first similarity range according to a maximum value of the similarity value.

In an embodiment of this application, the performing first comparison on the triple information and a corresponding node in a preset knowledge graph, and determining a second similarity range of the query text and nodes in the knowledge graph includes:
constructing a first triple according to entity information in the query text and a relationship between the entity information, the first triple including one or more;
constructing a second triple according to the entity information, an attribute, and a corresponding attribute value in the query text, the second triple including one or more;
comparing the first triple and the second triple with nodes in the knowledge graph separately to acquire similarity between each triple and a corresponding matching node;
performing weighting processing on the similarity according to a preset node matching weight to obtain similarity between each entity information and the knowledge graph; and
determining the second similarity range according to a maximum value of the similarity between each entity information and the knowledge graph.

In an embodiment of this application, the comparing the first triple and the second triple with nodes in the knowledge graph separately to acquire similarity between each triple and a corresponding matching node includes:
acquiring entity information in the first triple, comparing the entity information and the nodes in the knowledge graph, and acquiring one or more first matching nodes reaching preset similarity as matching nodes of the first triple;
acquiring adjacent nodes of each of the first matching nodes, removing adjacent nodes having a connection relationship, and combining remaining adjacent nodes into an adjacent set; and
performing similarity comparison on an attribute value in the second triple and a node in the adjacent set, and acquiring one or more second matching nodes reaching the preset similarity as matching nodes of the second triple.

In an embodiment of this application, the performing weighting processing on the similarity according to a preset node matching weight to obtain similarity between each entity information and the knowledge graph includes:
presetting a weight ratio matched to an entity and a weight ratio matched to an attribute value, and taking the weight ratios as node matching weights of nodes of a corresponding knowledge graph; and
obtaining similarity between corresponding entity information and the knowledge graph according to a similarity value of matching nodes corresponding to the same entity information in the first triple and the second triple multiplied by a corresponding matching weight.

In an embodiment of this application, the performing second comparison on the first similarity range, the second similarity range, and a preset similarity range threshold value to determine to output a corresponding reply text in the knowledge base or the knowledge graph includes:
a preset similarity range including a first preset range, a second preset range, and a third preset range in, a similarity value corresponding to the first preset range being greater than a similarity value corresponding to the second preset range, and the similarity value corresponding to the second preset range being greater than a similarity value corresponding to the third preset range;
taking a matched standard reply text in the knowledge base as an output if the first similarity range intersects with the first preset range;
acquiring standard reply texts in the knowledge base and sorting same from high to low according to similarity, taking a plurality of standard reply texts ranking in front as the output, and acquiring reply texts corresponding to matching nodes in the knowledge graph as the output if intersections of the first similarity range and the second similarity range with the first preset range are empty sets, and both the first similarity range and the second similarity range intersect with the second preset range; and
taking the plurality of standard reply texts ranking in front in the knowledge base as the output and acquiring a node relationship in the knowledge graph as a reply text output if intersections of the first similarity range and the second similarity range with the first preset range and the second preset range are empty sets, and both the first similarity range and the second similarity range intersect with the third preset range.

In an embodiment of this application, the performing second comparison on the first similarity range, the second similarity range, and a preset similarity range threshold value to determine to output a corresponding reply text in the knowledge base or the knowledge graph further includes:
initiating an idle dialogue and acquiring a universal question and answer text in the knowledge base when both the first similarity range and the second similarity range are lower than the preset similarity range threshold value.

In an embodiment of this application, after the initiating an idle dialogue, the method further includes:
acquiring text data fed back by a user in the idle dialogue;
comparing the text data and nodes in the knowledge graph to obtain one or more associated nodes; and
generating a first question according to the associated nodes and outputting same to a client to guide the user to complete a question and answer interaction.

In an embodiment of this application, the generating a first question according to the associated nodes and outputting same to a client to guide a user to complete a question and answer interaction includes:
acquiring adjacent nodes of the associated nodes from the knowledge graph and generating the first question according to a connection relationship between the associated nodes and corresponding adjacent nodes;
acquiring one or more standard questions matched to the first question in the knowledge base; and
outputting the first question and the matched standard questions to the client.

This application further provides a FAQ answering system, including:
a query interaction module, configured to acquire a query text and triple information of the query text;
a knowledge base retrieval module, configured to determine a first similarity range between the query text and each standard reply text in a knowledge base according to a similarity matching threshold value of a preset standard question in a preset knowledge base, the knowledge base being composed of standard question and answer pairs;
a knowledge graph retrieval module, configured to perform first comparison on the triple information and a corresponding node in a preset knowledge graph, and determine a second similarity range of the query text and nodes in the knowledge graph; and
a decision output module, configured to perform second comparison on the first similarity range, the second similarity range, and a preset similarity range threshold value to determine to output a corresponding reply text in the knowledge base or the knowledge graph.

A computer device includes a memory, a processor, and a computer program stored in the memory and run on the processor which, when executes the computer program, performs the steps of the FAQ answering method.

A computer-readable storage medium stores thereon a computer program which, when executed by a processor, performs the steps of the FAQ answering method.

As described above, the FAQ answering method and system, the device, and the medium in this application have the following beneficial effects.

This application acquires a query text and triple information of the query text; determines a first similarity range between the query text and each standard reply text in a knowledge base according to a similarity matching threshold value of a preset standard question in a preset knowledge base, the knowledge base being composed of standard question and answer pairs; performs first comparison on the triple information and a corresponding node in a preset knowledge graph, and determines a second similarity range of the query text and nodes in the knowledge graph; and performs second comparison on the first similarity range, the second similarity range, and a preset similarity range threshold value to determine to output a corresponding reply text in the knowledge base or the knowledge graph. In addition, this application performs decision output by combining the knowledge base and the knowledge graph. In this way, the accuracy of the question and answer response can be improved, and the user experience can be enhanced.

### Brief Description of the Drawings

FIG. 1 is a schematic structural diagram of a FAQ answering apparatus according to an embodiment of this application.
FIG. 2 is a flowchart of a FAQ answering implementation scenario according to an embodiment of this application.
FIG. 3 is a flowchart of a FAQ answering method according to an embodiment of this application.
FIG. 4 is a schematic diagram for dividing threshold value ranges of a knowledge base and a knowledge graph according to an embodiment of this application.
FIG. 5 is a block diagram of a FAQ answering system according to an embodiment of this application.
FIG. 6 is a schematic structural diagram of a device according to an embodiment of this application.

### Detailed Description of the Embodiments

The following is a specific example to illustrate the implementations of this application. Other advantages and effects of this application will be easily understood by those skilled in the art from the content disclosed in this specification. This application can also be implemented or applied by different specific implementations, and the details in this specification can also be modified or changed based on different perspectives and applications without departing from the spirit of this application. It should be noted that, without conflict, the following embodiments and the features in the embodiments can be combined with each other.

It should be noted that the illustrations provided in the following embodiments merely illustrate the basic idea of this application in a schematic way, and thus the illustrations only show the assemblies related to this application rather than being drawn based on the number, shape and size of the assemblies in actual implementation. In actual implementation, the type, number and scale of the assemblies may be arbitrarily changed, and the layout type of the assemblies may be more complicated.

The questions and answers are mostly in the form of questions and answers in a knowledge base only. By performing retrieval and matching on the defined question and answer pair, the matching result is returned. There are the following problems in this kind of question and answer way.
1. The knowledge base needs to include all the user questions to achieve better effects. The sentence length is not too long, otherwise the matching results will be affected in calculating the sentence similarity, and the request for the question and answer pair is higher.
2. The questions in the knowledge base are limited, such as the same type of questions, "What should I do if the engine doesn't start?", "What should I do if the wiper is broken", and "What should I do if the tire is broken?". In the knowledge base, it is necessary to list the fault questions corresponding to each part of the automobile one by one, which is inefficient.

This application provides the following embodiments to solve the above problems present in the related art.

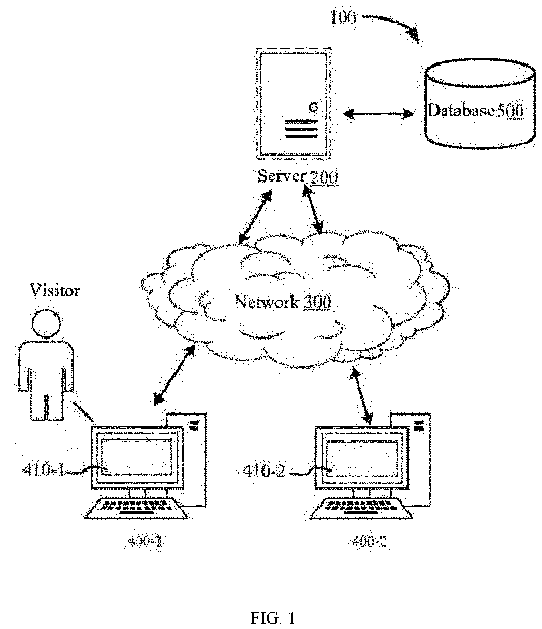

Referring to FIG. 1, FIG. 1 is a schematic structural diagram of a FAQ answering apparatus 100 according to an embodiment of this application. Only two terminals 410-1 and 410-2 are shown in the figure, a plurality of terminals may be included, and each terminal is connected to a server 200 via a network 300. Taking the example of including the terminal 410-1 and the terminal 410-2, the visitor may select to input a query text in any one of the terminal 410-1 and the terminal 410-2, and transmit the query text to the server 200 via the network 300. A database 500 may be used for storing the knowledge base and the knowledge graph. After receiving the query text, the server 200 calls the knowledge base and the knowledge graph in the database 500 to perform problem retrieval and result decision output. The terminal 410-1 and the terminal 410-2 may include a terminal device with a display interaction interface, such as a computer terminal, a mobile phone, a tablet, and a question and answer robot. The network 300 may be a wide area network, a local area network, or a combination thereof.

In another embodiment, the server 200 may also output the knowledge base and the knowledge graph in the database 500 to the terminal according to the request of the terminal 410-1, and the terminal performs the retrieval decision output.

In an embodiment, the server 200 may be an independent physical server, or may be a server cluster or a distributed system of a plurality of the physical servers, or may be a cloud server providing basic cloud computing services, such as cloud service, cloud database, cloud computing, cloud function, cloud storage, network service, cloud communication, middleware service, domain name service, CDN, and big data and AI platforms. The terminal and the server may be directly or indirectly connected by a wired or wireless communication way, which is not limited in the embodiments of this application.

In an embodiment, the terminal 410-1 may also be directly connected to the terminal 410-2, and the terminal 410-1 is configured to acquire the query text of the visitor and output the query text to the terminal 410-2 for text retrieval to acquire a reply text. The terminal 410-2 is configured to create a standard question and answer pair and save the standard question and answer pair in the knowledge base. Terminal 410-2 may further be configured to create a knowledge graph and save the knowledge graph locally.

In another embodiment, the operations, including knowledge base creation, knowledge graph construction, and receiving visitor input for retrieval, may also be performed on the terminal 410-1 or the terminal 410-2. All functions are integrated in one terminal, and the user only needs to interact with one terminal to quickly acquire response data.

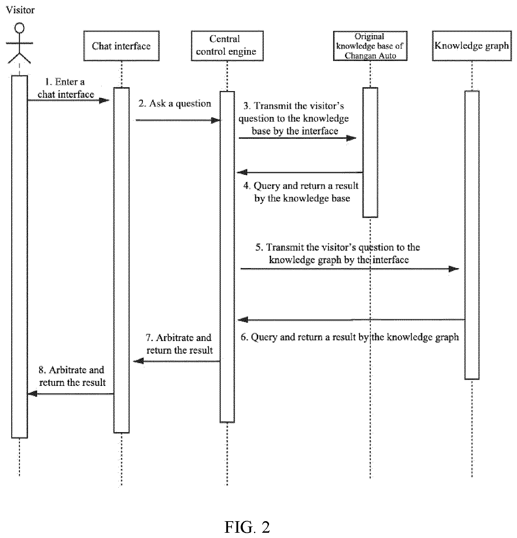

Referring to FIG. 2, FIG. 2 is a schematic diagram of an implementation scenario according to an embodiment of this application. The visitor may perform dialogue interaction with the terminal by a chat interface provided by the terminal. After the visitor inputs a question to be queried, the central control engine of the terminal is triggered to feed back the visitor's question to the knowledge base by the interface for retrieval and comparison. The knowledge fields included in the knowledge base can be set according to the actual application need, and the knowledge base of automotive faults is taken as an example herein. The visitor inputs "What should I do if there is an abnormal sound in the car engine" by the chat interface. The central control engine calls the data in the knowledge base of automotive faults to ask a question. The knowledge base returns a query result to the central control engine. Likewise, the central control engine also transmits the visitor input question to the knowledge graph by the interface for retrieval and analysis to obtain a query result fed back by the knowledge graph. The central control engine arbitrates based on the query results of the knowledge base and the knowledge graph, determines whether the answer outputted by the knowledge base is more accurate or the answer outputted by the knowledge graph is more accurate, and then feeds back an arbitration result to the visitor.

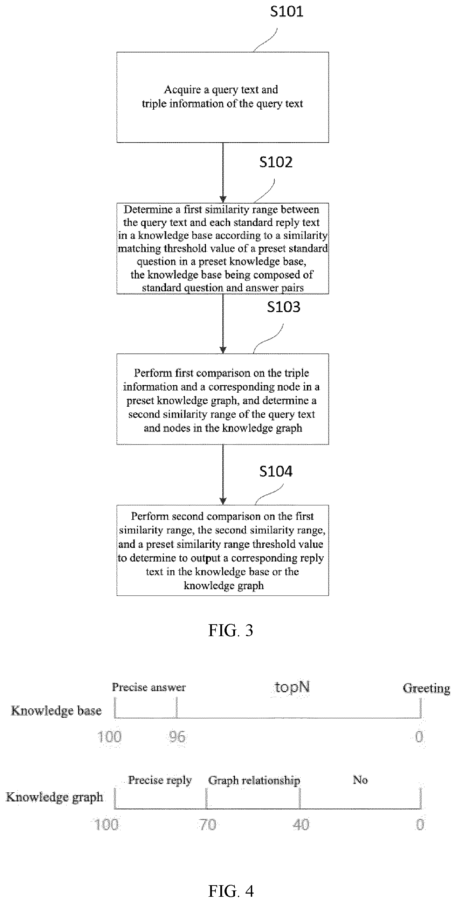

Referring to FIG. 3, this application provides a FAQ answering method to be applied to the above FAQ answering apparatus and a real-time scenario, and the method includes the following steps.

In a step of S 101, a query text and triple information of the query text are acquired.

The user can enter the query text by an interaction interface provided by the terminal and can also collect the user's voice by a voice collection device and the like to convert the voice into a corresponding query text. At the same time, information, such as an entity, entity relationship, and an attribute in the query text is extracted to construct a triple.

In a step of S 102, a first similarity range between the query text and each standard reply text in a knowledge base is determined according to a similarity matching threshold value of a preset standard question in a preset knowledge base, the knowledge base being composed of standard question and answer pairs.

In an embodiment, the determining a first similarity range between the query text and each standard reply text in a knowledge base according to a similarity matching threshold value of a preset standard question in a preset knowledge base in step S 102 further includes the following steps.

In a step of S1021, similarity comparison is performed on the query text and a standard question in the knowledge base to obtain a similarity value of each standard question.

In a step of S 1022, the similarity value is taken as a similarity value of a standard reply text corresponding to the standard question, and the first similarity range is determined according to a maximum value of the similarity value.

The question and answer system first needs to construct a data set of question and answer pairs with a relatively comprehensive coverage, and then uses similarity matching to perform question matching. Several standard questions which may be similar to the visitor question are retrieved from the knowledge base based on the visitor question acquired by the question and answer system. These several standard questions are referred to as candidate similar questions. The similarity of the visitor question with each standard question is then calculated to determine whether the question is a synonymous question of the visitor question. If it is the synonymous question, the answer to the synonymous question is the answer to the visitor question. At this time, the system will return the question and answer pair to the visitor as an answer.

However, it is worth noting that, regardless of the quality of the candidate similar question recalled by a retrieval module for the visitor question, a similar standard question selection module will find a standard question with the "highest similarity" for the visitor question. However, this standard question with the "highest similarity" is sometimes not necessarily a similar question to the visitor question. To avoid this case, a threshold value may be set for text similarity, and then there are three cases based on the matching result.
(1) If the matching degree with a certain question in the knowledge base is high, the answer to the question is directly returned.
(2) If the matching degree with a plurality of questions in the knowledge base exceeds a certain threshold value, the question of TopN is returned, and the user selects the most accurate question.
(3) If the similarity of all the questions in the knowledge base does not exceed the threshold value, it turns into a chat robot.

To compare with the threshold value, it is necessary to first obtain the similarity value between the query text and the standard question in the knowledge base according to step S 1021 and step S 1022, and select the maximum similarity value as the upper limit of the first similarity range. Exemplarily, if the maximum similarity between the standard question in the knowledge base and the query text is 0.85, the first similarity range may be set as 0-0.85.

In a step of S103, first comparison is performed on the triple information and a corresponding node in a preset knowledge graph, and a second similarity range of the query text and nodes in the knowledge graph is determined.

The knowledge graph of the corresponding field may be constructed in advance. The knowledge graph has advantages in that it is universal for the same type of questions, and under the same type of questions, it can be directly parsed into the pattern of graph data query sentences. For example, the same type of questions is: "What should I do if the engine doesn't start?", "What should I do if the wiper is broken", and "What should I do if the tire is broken?". The same type of questions described above may be expressed as: "fault + engine", "fault + wiper", "fault + tire", and the answer to the knowledge graph is directly returned. Taking the automobile field as an example, when constructing a knowledge graph, documents, such as driving instruction, may be directly inputted into the system. Information is extracted from unstructured, semi-structured, and structured data by system parsing. Entities, attributes, and a relationship between the entities need to be extracted from various data sources, and an ontology-based knowledge expression is formed on this basis. Many entities obtained from information extraction are discrete, redundant or even partially erroneous, and knowledge fusion is required to remove redundant errors and perform entity association. It mainly includes entity linking and knowledge merging. The entity linking refers to the operation of correctly linking a newly extracted entity object to an existing entity object. The above processes of information extraction and knowledge fusion are just processing the factual data, and the knowledge that can be used to obtain a structured network expression must be subjected to knowledge processing. The knowledge processing includes 3 aspects: ontology construction, knowledge reasoning, and quality assessment. A connection between entity nodes is established according to the entity information and the relationship between the entities. Likewise, a connection between an entity node and the attribute is established according to the entity, the attribute, and the corresponding attribute value. The attribute may include date, maintenance times, and service life. The attribute value may be specific date; specific maintenance times, such as 2 times; specific service life, such as 3 years. After completing the construction of the knowledge graph, the knowledge graph is stored in the database.

In an embodiment, step S 103 further includes the following steps.

In a step of S 1 031, a first triple is constructed according to entity information in the query text and a relationship between the entity information, the first triple including one or more.

In a step of S1032, a second triple is constructed according to the entity information, an attribute, and a corresponding attribute value in the query text, the second triple including one or more.

In a step of S 1033, the first triple and the second triple are compared with nodes in the knowledge graph separately to acquire similarity between each triple and a corresponding matching node.

In a step of S1034, weighting processing is performed on the similarity according to a preset node matching weight to obtain similarity between each entity information and the knowledge graph.

In a step of S1035, the second similarity range is determined according to a maximum value of the similarity between each entity information and the knowledge graph.

In an embodiment, after acquiring the query text inputted by the visitor, the triple information included in the query text may be further extracted. Since the query text may include one or more query sentences, or one query sentence may include a plurality of entities at the same time, the entire query text may be represented in a triple as a unit. In particular, the entity may be split from the attribute, the relationship between two entities is represented by the first triple, and the relationship between the entity and the attribute is represented by the second triple. The corresponding nodes are matched from the knowledge graph separately by the first triple and the second triple, and the similarity value between the nodes in the knowledge graph and the first triple or the second triple is recorded.

In an embodiment, the comparing the first triple and the second triple with nodes in the knowledge graph separately to acquire similarity between each triple and a corresponding matching node in step S1033 includes the following steps.

In a step of S10331, entity information in the first triple is acquired, the entity information and nodes in the knowledge graph are compared, and one or more first matching nodes reaching preset similarity are acquired as matching nodes of the first triple.

In a step of S 10332, adjacent nodes of each of the first matching nodes are acquired, adjacent nodes having a connection relationship are removed, and remaining adjacent nodes are combined into an adjacent set.

In a step of S10333, similarity comparison is performed on an attribute value in the second triple and a node in the adjacent set, and one or more second matching nodes reaching the preset similarity are acquired as matching nodes of the second triple.

An entity set may be constructed according to the entity information in the query text. Taking the entity information in the entity set as a unit, similarity comparison with the entity nodes in the knowledge graph is performed in advance. The entity nodes reaching the preset similarity threshold value are acquired as first matching nodes of the entity set, i.e., matching nodes of each first triple. Further, adjacent nodes of each first matching node in the knowledge graph may be acquired, and the adjacent set may be established based on the adjacent nodes. Since the first matching nodes may be adjacent nodes to each other. Namely, two entities having an entity relationship in the first triple correspond to two entity nodes having a connection relationship in the knowledge graph, respectively. When forming the adjacent set, the first matching nodes may be redundant. When performing retrieval and matching for the attributes of the query text, the redundant first matching nodes will greatly reduce the efficiency of retrieval and matching. Therefore, it is necessary to remove the adjacent nodes having a connection relationship in the adjacent set to facilitate subsequent retrieval and comparison of the second triple.

In an embodiment, similarity comparison is performed between an attribute value in the second triple and a node in the adjacent set, second matching nodes with the similarity reaching the set threshold value in the second triple are acquired, and similarity values between the attribute value and the second matching nodes are recorded. Based on the above steps, a matching node and a matching similarity value of other entity information having an entity relationship with each entity information in the query text, and a matching node and a matching similarity value of an attribute value of each entity information may be acquired. Since the entity information may be polysemy, and the certainty of the attribute value is higher, a matching weight ratio of the matching node acquired from the knowledge graph according to the attribute value may be preset to be higher than a matching weight ratio of the matching node acquired from the knowledge graph according to the entity information. The specific matching weight ratio configuration may be selected according to the actual application need, which is not limited herein.

In an embodiment, the performing weighting processing on the similarity according to a preset node matching weight to obtain similarity between each entity information and the knowledge graph in step S1034 includes the following steps.

In a step of S10341, a weight ratio matched to an entity and a weight ratio matched to an attribute value are preset, and the weight ratios are taken as node matching weights of nodes of a corresponding knowledge graph.

In a step of S10342, similarity between corresponding entity information and the knowledge graph is obtained according to a similarity value of matching nodes corresponding to the same entity information in the first triple and the second triple multiplied by a corresponding matching weight.

In an embodiment, comprehensive similarity of each entity information in the query text is determined based on the matching weight ratio. Exemplarily, it is assumed that the query text includes entity information A1, A2 and A3, and attribute values B1 and B2; A1 and A2 form an entity triple. Then B1 is the attribute value of A1, B2 is the attribute value of A3, and A3 has no entity relationship with A1 and A2. A1, A2 and A3 acquire the corresponding matching nodes a1, a2 and a3 from the knowledge graph, respectively. The matching nodes acquired by B1 and B2 from the knowledge graph are b1 and b2, respectively. It is recorded that the similarity between A1 and a1 is s1, the similarity between A2 and a2 is s2, the similarity between A3 and a3 is s3, the similarity between B1 and b1 is s4, and the similarity between B2 and b2 is s5. Then the comprehensive similarity of the entity information A1 may be expressed as: α * (s1 + s2) + β * s4; the comprehensive similarity of the entity information A2 may be expressed as: α * s2; the comprehensive similarity of the entity information A3 may be expressed as: α * s3 + β * s5. α is a matching weight corresponding to an entity information, and β is a matching weight corresponding to an attribute value. The weight value may be set to ensure that the comprehensive similarity is between 0-1, and the data is normalized for subsequent application and calculation.

By the above steps, the entity information with the maximum similarity may be selected from various entity information. The maximum comprehensive similarity value is taken as the upper limit of the second similarity range, and the lower limit may be set as 0 or other suitable values according to the need, which is not limited herein.

In a step of S104, second comparison is performed on the first similarity range, the second similarity range, and a preset similarity range threshold value to determine to output a corresponding reply text in the knowledge base or the knowledge graph.

In an embodiment, the performing second comparison on the first similarity range, the second similarity range, and a preset similarity range threshold value to determine to output a corresponding reply text in the knowledge base or the knowledge graph in step S 104 includes the following steps.

In a step of S1041, a first preset range, a second preset range, and a third preset range are included in the preset similarity range, a similarity value corresponding to the first preset range being greater than a similarity value corresponding to the second preset range, and the similarity value corresponding to the second preset range being greater than a similarity value corresponding to the third preset range.

In a step of S1042, a matched standard reply text in the knowledge base is taken as an output if the first similarity range intersects with the first preset range.

In a step of S1043, standard reply texts in the knowledge base are acquired and sorted from high to low according to similarity, a plurality of standard reply texts ranking in front are taken as the output, and reply texts corresponding to matching nodes in the knowledge graph are acquired as the output if intersections of the first similarity range and the second similarity range with the first preset range are empty sets, and both the first similarity range and the second similarity range intersect with the second preset range.

In a step of S1044, the plurality of standard reply texts ranking in front in the knowledge base are taken as the output, and a node relationship in the knowledge graph is acquired as a reply text output if intersections of the first similarity range and the second similarity range with the first preset range and the second preset range are empty sets, and both the first similarity range and the second similarity range intersect with the third preset range.

According to the similarity between the entity information in the query text and the nodes in the knowledge graph, the matching result acquired from the knowledge graph is divided into three categories: precise reply, graph relationship, and no matching result. Further, according to the similarity size, the priority returned by the matching result may be set as: precise reply > graph relationship > no matching result. The answer acquired from the knowledge base is divided into three categories: precise answer, topN, and greeting. topN refers to N standard answers ranking in front from big to small according to similarity in the knowledge base. Different similarity range threshold values may be separately defined for the knowledge base and the knowledge graph, as shown in FIG. 4.

Referring to FIG. 4, in an example, a rule of the graph threshold value may be set below.
Knowledge base: direct return [0.96, 1], topN (0, 0.96), and greeting [0];
Knowledge graph: precise reply [0.7, 1], graph relationship [0.4, 0.7), and unknown [0, 0.4).

In an embodiment, if the threshold value range is [0.96, 1], then a knowledge base (direct return)/knowledge graph (precise reply) is hit, and the result is given as the knowledge base (direct return).

If the threshold value range is [0.7, 0.96), then a knowledge base (topN) and a knowledge graph (precise reply) are hit, and the result is given as the knowledge base (topN) and the knowledge graph (precise reply).

If the threshold value range is [0.4, 0.7), then a knowledge base (topN) and a knowledge graph (relationship) are hit, and the result is given as the knowledge base (topN) and the knowledge graph (relationship).

If the threshold value range is (0, 0.4), then the knowledge base (topN) and the knowledge graph (no matching result) are hit, and the result is given as the knowledge base (topN).

If the threshold value range is [0], then a knowledge base (chat) is hit, and the result is given as the knowledge base (chat).

In an embodiment, a batch of test sets may be sorted, answer types of the matched knowledge base and graph may be obtained by uploading, and the final given result may be derived. Then after manual review of the result, the threshold values corresponding to the three answer types of the graph and the ranges of the three types of precise reply, graph relationship and no matching result may be adjusted.

In an embodiment, step S104 further includes step S4015: initiating an idle dialogue and acquiring a universal question and answer text in the knowledge base when both the first similarity range and the second similarity range are lower than the preset similarity range threshold value.

In an embodiment, after the initiating an idle dialogue, the method further includes the following steps:
acquiring text data fed back by a user in the idle dialogue;
comparing the text data and nodes in the knowledge graph to obtain one or more associated nodes; and
generating a first question according to the associated nodes and outputting same to a client to guide the user to complete a question and answer interaction.

In an embodiment, the generating a first question according to the associated nodes and outputting same to a client to guide a user to complete a question and answer interaction includes the following steps:
acquiring adjacent nodes of the associated nodes from the knowledge graph and generating the first question according to a connection relationship between the associated nodes and corresponding adjacent nodes;
acquiring one or more standard questions matched to the first question in the knowledge base; and
outputting the first question and the matched standard questions to the client.

In particular, features that the user is interested are extracted based on a chat data record, nodes are matched from the knowledge graph, and adjacent nodes of the matched nodes are acquired to constitute the associated nodes. A question or reply text output is generated based on the associated nodes for reference by the visitor. When the sentence generated by the association nodes is a question, it is determined whether there is a matched standard question in the knowledge base for the generated question, and one or more similar standard questions and the sentence generated by the knowledge graph are outputted together to a terminal corresponding to the visitor for the visitor to screen. The visitor is guided to complete the question and answer interaction, and the interaction achievement rate is improved.

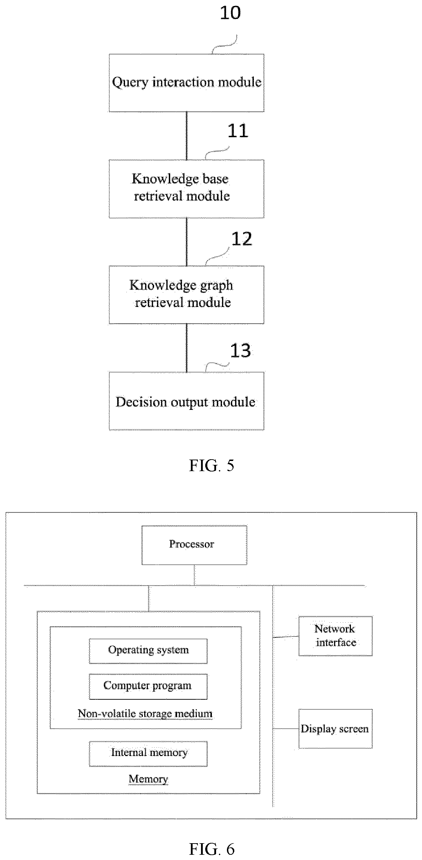

In an embodiment, as shown in FIG. 5, a FAQ answering system is provided. The system includes: a query interaction module 10, configured to acquire a query text and triple information of the query text; a knowledge base retrieval module 11, configured to determine a first similarity range between the query text and each standard reply text in a knowledge base according to a similarity matching threshold value of a preset standard question in a preset knowledge base, the knowledge base being composed of standard question and answer pairs; a knowledge graph retrieval module 12, configured to perform first comparison on the triple information and a corresponding node in a preset knowledge graph, and determine a second similarity range of the query text and nodes in the knowledge graph; and a decision output module 13, configured to perform second comparison on the first similarity range, the second similarity range, and a preset similarity range threshold value to determine to output a corresponding reply text in the knowledge base or the knowledge graph.

In an embodiment, the knowledge base retrieval module 11 is further configured to perform similarity comparison on the query text and a standard question in the knowledge base to obtain a similarity value of each standard question; and take the similarity value as a similarity value of a standard reply text corresponding to the standard question, and determine the first similarity range according to a maximum value of the similarity value.

In an embodiment, the knowledge graph retrieval module 12 is further configured to construct a first triple according to entity information in the query text and a relationship between the entity information, the first triple including one or more; construct a second triple according to the entity information, an attribute, and a corresponding attribute value in the query text, the second triple including one or more; compare the first triple and the second triple with nodes in the knowledge graph separately to acquire similarity between each triple and a corresponding matching node; perform weighting processing on the similarity according to a preset node matching weight to obtain similarity between each entity information and the knowledge graph; and determine the second similarity range according to a maximum value of the similarity between each entity information and the knowledge graph.

In an embodiment, the knowledge graph retrieval module 12 is further configured to compare the first triple and the second triple with nodes in the knowledge graph separately to acquire similarity between each triple and a corresponding matching node. It includes: acquiring entity information in the first triple, comparing the entity information and the nodes in the knowledge graph, and acquiring one or more first matching nodes reaching preset similarity as matching nodes of the first triple; acquiring adjacent nodes of each of the first matching nodes, removing adjacent nodes having a connection relationship, and combining remaining adjacent nodes into an adjacent set; and performing similarity comparison on an attribute value in the second triple and a node in the adjacent set, and acquiring one or more second matching nodes reaching the preset similarity as matching nodes of the second triple.

In an embodiment, the knowledge graph retrieval module 12 is further configured to perform weighting processing on the similarity according to a preset node matching weight to obtain similarity between each entity information and the knowledge graph. It includes: presetting a weight ratio matched to an entity and a weight ratio matched to an attribute value, and taking the weight ratios as node matching weights of nodes of a corresponding knowledge graph; and obtaining similarity between corresponding entity information and the knowledge graph according to a similarity value of matching nodes corresponding to the same entity information in the first triple and the second triple multiplied by a corresponding matching weight.

In an embodiment, the decision output module 13 is further configured for a preset similarity range including a first preset range, a second preset range, and a third preset range, a similarity value corresponding to the first preset range being greater than a similarity value corresponding to the second preset range, and the similarity value corresponding to the second preset range being greater than a similarity value corresponding to the third preset range; take a matched standard reply text in the knowledge base as an output if the first similarity range intersects with the first preset range; acquire standard reply texts in the knowledge base and sort same from high to low according to similarity, take a plurality of standard reply texts ranking in front as the output, and acquire reply texts corresponding to matching nodes in the knowledge graph as the output if intersections of the first similarity range and the second similarity range with the first preset range are empty sets, and both the first similarity range and the second similarity range intersect with the second preset range; and take the plurality of standard reply texts ranking in front in the knowledge base as the output and acquire a node relationship in the knowledge graph as a reply text output if intersections of the first similarity range and the second similarity range with the first preset range and the second preset range are empty sets, and both the first similarity range and the second similarity range intersect with the third preset range.

In an embodiment, the decision output module 13 is further configured to initiate an idle dialogue and acquire a universal question and answer text in the knowledge base when both the first similarity range and the second similarity range are lower than the preset similarity range threshold value.

In an embodiment, the decision output module 13 is further configured to after the initiating an idle dialogue, acquire text data fed back by a user in the idle dialogue; compare the text data and nodes in the knowledge graph to obtain one or more associated nodes; and generate a first question according to the associated nodes and output same to a client to guide the user to complete a question and answer interaction.

In an embodiment, the decision output module 13 is further configured to generate a first question according to the associated nodes and output same to a client to guide a user to complete a question and answer interaction. It includes: acquiring adjacent nodes of the associated nodes from the knowledge graph and generating the first question according to a connection relationship between the associated nodes and corresponding adjacent nodes; acquiring one or more standard questions matched to the first question in the knowledge base; and outputting the first question and the matched standard questions to the client.

The above FAQ answering system may be implemented in the form of a computer program that runs on a computer device as shown in FIG. 6. A computer device includes a memory, a processor, and a computer program stored in the memory and run on the processor.

The modules in the above FAQ answering system may be implemented in whole or in part by software, hardware, and a combination thereof. The above modules may be embedded or independent from the memory of the terminal in the form of hardware, and may also be stored in the memory of the terminal in the form of software, so that the processor calls to perform the corresponding operations of the above modules. The processor may be a central processing unit (CPU), a microprocessor, a single-chip computer, and the like.

FIG. 6 is a schematic diagram of an internal structure of a computer device according to an embodiment. Provided is a computer device, which includes a memory, a processor, and a computer program stored in the memory and run on the processor which, when executes the computer program, performs following steps: acquiring a query text and triple information of the query text; determining a first similarity range between the query text and each standard reply text in a knowledge base according to a similarity matching threshold value of a preset standard question in a preset knowledge base, the knowledge base being composed of standard question and answer pairs; performing first comparison on the triple information and a corresponding node in a preset knowledge graph, and determining a second similarity range of the query text and nodes in the knowledge graph; and performing second comparison on the first similarity range, the second similarity range, and a preset similarity range threshold value to determine to output a corresponding reply text in the knowledge base or the knowledge graph.

In an embodiment, when executed by the above processor, the implemented determining a first similarity range between the query text and each standard reply text in a knowledge base according to a similarity matching threshold value of a preset standard question in a preset knowledge base includes: performing similarity comparison on the query text and a standard question in the knowledge base to obtain a similarity value of each standard question; and taking the similarity value as a similarity value of a standard reply text corresponding to the standard question, and determining the first similarity range according to a maximum value of the similarity value.

In an embodiment, when executed by the above processor, the implemented performing first comparison on the triple information and a corresponding node in a preset knowledge graph, and determining a second similarity range of the query text and nodes in the knowledge graph includes: constructing a first triple according to entity information in the query text and a relationship between the entity information, the first triple including one or more; constructing a second triple according to the entity information, an attribute, and a corresponding attribute value in the query text, the second triple including one or more; comparing the first triple and the second triple with nodes in the knowledge graph separately to acquire similarity between each triple and a corresponding matching node; performing weighting processing on the similarity according to a preset node matching weight to obtain similarity between each entity information and the knowledge graph; and determining the second similarity range according to a maximum value of the similarity between each entity information and the knowledge graph.

In an embodiment, when executed by the above processor, the implemented comparing the first triple and the second triple with nodes in the knowledge graph separately to acquire similarity between each triple and a corresponding matching node includes: acquiring entity information in the first triple, comparing the entity information and the nodes in the knowledge graph, and acquiring one or more first matching nodes reaching preset similarity as matching nodes of the first triple; acquiring adjacent nodes of each of the first matching nodes, removing adjacent nodes having a connection relationship, and combining remaining adjacent nodes into an adjacent set; and performing similarity comparison on an attribute value in the second triple and a node in the adjacent set, and acquiring one or more second matching nodes reaching the preset similarity as matching nodes of the second triple.

In an embodiment, when executed by the above processor, the implemented performing weighting processing on the similarity according to a preset node matching weight to obtain similarity between each entity information and the knowledge graph includes: presetting a weight ratio matched to an entity and a weight ratio matched to an attribute value, and taking the weight ratios as node matching weights of nodes of a corresponding knowledge graph; and obtaining similarity between corresponding entity information and the knowledge graph according to a similarity value of matching nodes corresponding to the same entity information in the first triple and the second triple multiplied by a corresponding matching weight.

In an embodiment, when executed by the above processor, the implemented performing second comparison on the first similarity range, the second similarity range, and a preset similarity range threshold value to determine to output a corresponding reply text in the knowledge base or the knowledge graph further includes: a preset similarity range including a first preset range, a second preset range, and a third preset range, a similarity value corresponding to the first preset range being greater than a similarity value corresponding to the second preset range, and the similarity value corresponding to the second preset range being greater than a similarity value corresponding to the third preset range; taking a matched standard reply text in the knowledge base as an output if the first similarity range intersects with the first preset range; acquiring standard reply texts in the knowledge base and sorting same from high to low according to similarity, taking a plurality of standard reply texts ranking in front as the output, and acquiring reply texts corresponding to matching nodes in the knowledge graph as the output if intersections of the first similarity range and the second similarity range with the first preset range are empty sets, and both the first similarity range and the second similarity range intersect with the second preset range; and taking the plurality of standard reply texts ranking in front in the knowledge base as the output and acquiring a node relationship in the knowledge graph as a reply text output if intersections of the first similarity range and the second similarity range with the first preset range and the second preset range are empty sets, and both the first similarity range and the second similarity range intersect with the third preset range.

In an embodiment, when executed by the above processor, the implemented performing second comparison on the first similarity range, the second similarity range, and a preset similarity range threshold value to determine to output a corresponding reply text in the knowledge base or the knowledge graph further includes: initiating an idle dialogue and acquiring a universal question and answer text in the knowledge base when both the first similarity range and the second similarity range are lower than the preset similarity range threshold value.

In an embodiment, when executed by the processor, after the initiating an idle dialogue, the method further includes: acquiring text data fed back by a user in the idle dialogue; comparing the text data and nodes in the knowledge graph to obtain one or more associated nodes; and generating a first question according to the associated nodes and outputting same to a client to guide the user to complete a question and answer interaction.

In an embodiment, when executed by the above processor, the implemented generating a first question according to the associated nodes and outputting same to a client to guide a user to complete a question and answer interaction includes: acquiring adjacent nodes of the associated nodes from the knowledge graph and generating the first question according to a connection relationship between the associated nodes and corresponding adjacent nodes; acquiring one or more standard questions matched to the first question in the knowledge base; and outputting the first question and the matched standard questions to the client.

In one embodiment, the computer device described above may be used as a server, including but not limited to a stand-alone physical server, or may be a server cluster composed of a plurality of physical servers. The computer device may also be used as a terminal, including but not limited to a mobile phone, a tablet, a personal digital assistant, or a smart device. As shown in FIG. 6, the computer device includes a processor, a non-volatile storage medium, an internal memory, a display screen, and a network interface connected by a system bus.

The processor of the computer device is configured to provide computation and control capabilities and support the operation of the whole computer device. The non-volatile storage medium of the computer device stores an operating system and a computer program. The computer program is executed by the processor for performing the FAQ answering method provided in the above embodiments. The internal memory of the computer device provides a cache running environment for the operating system and the computer program in the non-volatile storage medium. The display interface may display data by the display screen. The display screen may be a touch screen, such as a capacitive screen or an electronic screen, and a respective instruction may be generated by receiving a click operation acting on a control displayed on the touch screen.

It will be understood by those skilled in the art that the structure of the computer device shown in FIG. 6 is only a block diagram of a portion structure related to the schemes of this application and does not limit the computer device applied to this application. The specific computer device may include more or fewer components than the illustration in the drawings, or some components may be combined, or a different arrangement of components may be employed.

In one embodiment, there is provided a computer-readable storage medium storing thereon a computer program which, when executed by a processor, performs the following steps: acquiring a query text and triple information of the query text; determining a first similarity range between the query text and each standard reply text in a knowledge base according to a similarity matching threshold value of a preset standard question in a preset knowledge base, the knowledge base being composed of standard question and answer pairs; performing first comparison on the triple information and a corresponding node in a preset knowledge graph, and determining a second similarity range of the query text and nodes in the knowledge graph; and performing second comparison on the first similarity range, the second similarity range, and a preset similarity range threshold value to determine to output a corresponding reply text in the knowledge base or the knowledge graph.

In an embodiment, when the computer program is executed by the processor, the implemented determining a first similarity range between the query text and each standard reply text in a preset knowledge base according to a similarity matching threshold value of a preset standard question in a preset knowledge base includes: performing similarity comparison on the query text and a standard question in the knowledge base to obtain a similarity value of each standard question; and taking the similarity value as a similarity value of a standard reply text corresponding to the standard question, and determining the first similarity range according to a maximum value of the similarity value.

In an embodiment, when the computer program is executed by the processor, the implemented performing first comparison on the triple information and a corresponding node in a preset knowledge graph, and determining a second similarity range of the query text and nodes in the knowledge graph includes: constructing a first triple according to entity information in the query text and a relationship between the entity information, the first triple including one or more; constructing a second triple according to the entity information, an attribute, and a corresponding attribute value in the query text, the second triple including one or more; comparing the first triple and the second triple with nodes in the knowledge graph separately to acquire similarity between each triple and a corresponding matching node; performing weighting processing on the similarity according to a preset node matching weight to obtain similarity between each entity information and the knowledge graph; and determining the second similarity range according to a maximum value of the similarity between each entity information and the knowledge graph.

In an embodiment, when the computer program is executed by the processor, the implemented comparing the first triple and the second triple with nodes in the knowledge graph separately to acquire similarity between each triple and a corresponding matching node includes: acquiring entity information in the first triple, comparing the entity information and the nodes in the knowledge graph, and acquiring one or more first matching nodes reaching preset similarity as matching nodes of the first triple; acquiring adjacent nodes of each of the first matching nodes, removing adjacent nodes having a connection relationship, and combining remaining adjacent nodes into an adjacent set; and performing similarity comparison on an attribute value in the second triple and a node in the adjacent set, and acquiring one or more second matching nodes reaching the preset similarity as matching nodes of the second triple.

In an embodiment, when the computer program is executed by the processor, the implemented performing weighting processing on the similarity according to a preset node matching weight to obtain similarity between each entity information and the knowledge graph includes: presetting a weight ratio matched to an entity and a weight ratio matched to an attribute value, and taking the weight ratios as node matching weights of nodes of a corresponding knowledge graph; and obtaining similarity between corresponding entity information and the knowledge graph according to a similarity value of matching nodes corresponding to the same entity information in the first triple and the second triple multiplied by a corresponding matching weight.

In an embodiment, when the computer program is executed by the processor, the implemented performing second comparison on the first similarity range, the second similarity range, and a preset similarity range threshold value to determine to output a corresponding reply text in the knowledge base or the knowledge graph further includes: a preset similarity range including a first preset range, a second preset range, and a third preset range, a similarity value corresponding to the first preset range being greater than a similarity value corresponding to the second preset range, and the similarity value corresponding to the second preset range being greater than a similarity value corresponding to the third preset range; taking a matched standard reply text in the knowledge base as an output if the first similarity range intersects with the first preset range; acquiring standard reply texts in the knowledge base and sorting same from high to low according to similarity, taking a plurality of standard reply texts ranking in front as the output, and acquiring reply texts corresponding to matching nodes in the knowledge graph as the output if intersections of the first similarity range and the second similarity range with the first preset range are empty sets, and both the first similarity range and the second similarity range intersect with the second preset range; and taking the plurality of standard reply texts ranking in front in the knowledge base as the output and acquiring a node relationship in the knowledge graph as a reply text output if intersections of the first similarity range and the second similarity range with the first preset range and the second preset range are empty sets, and both the first similarity range and the second similarity range intersect with the third preset range.

In an embodiment, when the instruction is executed by the processor, the implemented performing second comparison on the first similarity range, the second similarity range, and a preset similarity range threshold value to determine to output a corresponding reply text in the knowledge base or the knowledge graph further includes: initiating an idle dialogue and acquiring a universal question and answer text in the knowledge base when both the first similarity range and the second similarity range are lower than the preset similarity range threshold value.

In an embodiment, when the instruction is executed by the processor, after the initiating an idle dialogue, the method further includes: acquiring text data fed back by a user in the idle dialogue; comparing the text data and nodes in the knowledge graph to obtain one or more associated nodes; and generating a first question according to the associated nodes and outputting same to a client to guide the user to complete a question and answer interaction.

In an embodiment, when the instruction is executed by the processor, the implemented generating a first question according to the associated nodes and outputting same to a client to guide a user to complete a question and answer interaction includes: acquiring adjacent nodes of the associated nodes from the knowledge graph and generating the first question according to a connection relationship between the associated nodes and corresponding adjacent nodes; acquiring one or more standard questions matched to the first question in the knowledge base; and outputting the first question and the matched standard questions to the client.

It will be appreciated by those skilled in the art that the implementation of all or part of the flows in the above method embodiments can be completed by instructing the relevant hardware by the computer program. The program can be stored in a non-volatile computer-readable storage medium. When executed, the program can include the flows in the embodiments of the above methods. The storage medium may be a magnetic disk, an optical disk, a read-only memory (ROM), and the like.

The above embodiments are only illustrative explanations of the principles and effects of this application, and are not intended to limit this application. Anyone familiar with this technology may modify or change the above embodiments without violating the spirit and scope of this application. Therefore, all equivalent modifications or changes made by those with ordinary knowledge in the technical field without departing from the spirit and technical ideas disclosed in this application shall still be covered by the claims of this application.

## Claims

1. A frequently asked question (FAQ) answering method, comprising:
acquiring a query text and triple information of the query text;
determining a first similarity range between the query text and each standard reply text in a knowledge base according to a similarity matching threshold value of a preset standard question in a preset knowledge base, the knowledge base being composed of standard question and answer pairs;
performing first comparison on the triple information and a corresponding node in a preset knowledge graph, and determining a second similarity range of the query text and nodes in the knowledge graph; and
performing second comparison on the first similarity range, the second similarity range, and a preset similarity range threshold value to determine to output a corresponding reply text in the knowledge base or the knowledge graph.

2. The FAQ answering method according to claim 1, wherein the determining a first similarity range between the query text and each standard reply text in a knowledge base according to a similarity matching threshold value of a preset standard question in a preset knowledge base comprises:
performing similarity comparison on the query text and a standard question in the knowledge base to obtain a similarity value of each standard question; and
taking the similarity value as a similarity value of a standard reply text corresponding to the standard question, and determining the first similarity range according to a maximum value of the similarity value.

3. The FAQ answering method according to claim 1, wherein the performing first comparison on the triple information and a corresponding node in a preset knowledge graph, and determining a second similarity range of the query text and nodes in the knowledge graph comprises:
constructing a first triple according to entity information in the query text and a relationship between the entity information, the first triple comprising one or more;
constructing a second triple according to the entity information, an attribute, and a corresponding attribute value in the query text, the second triple comprising one or more;
comparing the first triple and the second triple with nodes in the knowledge graph separately to acquire similarity between each triple and a corresponding matching node;
performing weighting processing on the similarity according to a preset node matching weight to obtain similarity between each entity information and the knowledge graph; and
determining the second similarity range according to a maximum value of the similarity between each entity information and the knowledge graph.

4. The FAQ answering method according to claim 3, wherein the comparing the first triple and the second triple with nodes in the knowledge graph separately to acquire similarity between each triple and a corresponding matching node comprises:
acquiring entity information in the first triple, comparing the entity information and the nodes in the knowledge graph, and acquiring one or more first matching nodes reaching preset similarity as matching nodes of the first triple;
acquiring adjacent nodes of each of the first matching nodes, removing adjacent nodes having a connection relationship, and combining remaining adjacent nodes into an adjacent set; and
performing similarity comparison on an attribute value in the second triple and a node in the adjacent set, and acquiring one or more second matching nodes reaching the preset similarity as matching nodes of the second triple.

5. The FAQ answering method according to claim 3, wherein the performing weighting processing on the similarity according to a preset node matching weight to obtain similarity between each entity information and the knowledge graph comprises:
presetting a weight ratio matched to an entity and a weight ratio matched to an attribute value, and taking the weight ratios as node matching weights of nodes of a corresponding knowledge graph; and
obtaining similarity between corresponding entity information and the knowledge graph according to a similarity value of matching nodes corresponding to the same entity information in the first triple and the second triple multiplied by a corresponding matching weight.

6. The FAQ answering method according to claim 1, wherein the performing second comparison on the first similarity range, the second similarity range, and a preset similarity range threshold value to determine to output a corresponding reply text in the knowledge base or the knowledge graph comprises:
a preset similarity range comprising a first preset range, a second preset range, and a third preset range, a similarity value corresponding to the first preset range being greater than a similarity value corresponding to the second preset range, and the similarity value corresponding to the second preset range being greater than a similarity value corresponding to the third preset range;
taking a matched standard reply text in the knowledge base as an output if the first similarity range intersects with the first preset range;
acquiring standard reply texts in the knowledge base and sorting same from high to low according to similarity, taking a plurality of standard reply texts ranking in front as the output, and acquiring reply texts corresponding to matching nodes in the knowledge graph as the output if intersections of the first similarity range and the second similarity range with the first preset range are empty sets, and both the first similarity range and the second similarity range intersect with the second preset range; and
taking the plurality of standard reply texts ranking in front in the knowledge base as the output and acquiring a node relationship in the knowledge graph as a reply text output if intersections of the first similarity range and the second similarity range with the first preset range and the second preset range are empty sets, and both the first similarity range and the second similarity range intersect with the third preset range.

7. The FAQ answering method according to claim 1, wherein the performing second comparison on the first similarity range, the second similarity range, and a preset similarity range threshold value to determine to output a corresponding reply text in the knowledge base or the knowledge graph further comprises:
initiating an idle dialogue and acquiring a universal question and answer text in the knowledge base when both the first similarity range and the second similarity range are lower than the preset similarity range threshold value.

8. The FAQ answering method according to claim 7, wherein after the initiating an idle dialogue, the method further comprises:
acquiring text data fed back by a user in the idle dialogue;
comparing the text data and nodes in the knowledge graph to obtain one or more associated nodes; and
generating a first question according to the associated nodes and outputting same to a client to guide the user to complete a question and answer interaction.

9. The FAQ answering method according to claim 8, wherein the generating a first question according to the associated nodes and outputting same to a client to guide the user to complete a question and answer interaction comprises:
acquiring adjacent nodes of the associated nodes from the knowledge graph and generating the first question according to a connection relationship between the associated nodes and corresponding adjacent nodes; and
acquiring one or more standard questions matched to the first question in the knowledge base, and outputting the first question and the matched standard questions to the client.

10. A frequently asked question (FAQ) answering system, comprising:
a query interaction module, configured to acquire a query text and triple information of the query text;
a knowledge base retrieval module, configured to determine a first similarity range between the query text and each standard reply text in a knowledge base according to a similarity matching threshold value of a preset standard question in a preset knowledge base, the knowledge base being composed of standard question and answer pairs;
a knowledge graph retrieval module, configured to perform first comparison on the triple information and a corresponding node in a preset knowledge graph, and determine a second similarity range of the query text and nodes in the knowledge graph; and
a decision output module, configured to perform second comparison on the first similarity range, the second similarity range, and a preset similarity range threshold value to determine to output a corresponding reply text in the knowledge base or the knowledge graph.

11. A computer device, comprising a memory, a processor, and a computer program stored in the memory and run on the processor which, when executes the computer program, performs the steps of the method according to any one of claims 1 to 9.

12. A computer-readable storage medium storing thereon a computer program which, when executed by a processor, performs the steps of the method according to any one of claims 1 to 9.
